# EUROPÄISCHE PATENTSCHRIFT

(11) **EP 0 651 698 B1**
(45) Veröffentlichungstag und Bekanntmachung des Hinweises auf die Patenterteilung: **04.08.1999**
(21) Anmeldenummer: 94914326.7
(22) Anmeldetag: 06.05.1994
(51) Int. Cl.: B32B 18/00

(54) **VERBUNDSYSTEME MIT MINDESTENS ZWEI ANORGANISCHEN KERAMISCHEN SCHICHTEN UND VERFAHREN ZU DEREN HERSTELLUNG**
COMPOSITES WITH AT LEAST TWO INORGANIC CERAMIC LAYERS, AND METHOD OF PRODUCING THEM
COMPOSITE AVEC AU MOINS DEUX COUCHES CERAMIQUES INORGANIAUES ET SON PROCEDE DE PREPARATION

(30) Priorität: 22.05.1993 DE 4317174
(43) Veröffentlichungstag der Anmeldung: 10.05.1995
(73) Patentinhaber: ROBERT BOSCH GMBH, 70442 Stuttgart (DE)
(72) Erfinder: FRIESE, Karl-Hermann, D-71229 Leonberg (DE); GRUENWALD, Werner, D-70839 Gerlingen (DE); EISELE, Ulrich, D-70188 Stuttgart (DE)
(86) Internationale Anmeldenummer: DE9400520
(87) Internationale Veröffentlichungsnummer: WO9427819

(56) Entgegenhaltungen:
- EP-A- 0 134 136
- EP-A- 0 166 445
- EP-A- 0 203 351
- EP-A- 0 263 468
- US-A- 4 957 673

## Beschreibung

### 1. Stand der Technik

Bauelemente, die Verbundsysteme mit mindestens zwei ebenen oder gekrümmten, aus unterschiedlichen anorganischen, keramischen Phasen bestehenden Schichten enthalten, sind in der Technik wohlbekannt. Als Beispiele seien Gassensoren, wie sie für die Messung von Kohlenmonoxid in Abgasen von Verbrennungsmotoren verwendet werden, sowie Heizelemente genannt. Die Verbundsysteme können in bekannter Weise durch Sintern feinteiliger anorganischer Materialien in zwei oder mehr Stufen hergestellt werden, indem man zunächst das Material, das die erste Schicht ergibt, formt und sintert, dann das Material der zweiten Schicht auf die erste Sinterschicht aufbringt und erneut sintert und diesen Vorgang so oft wiederholt, bis die gewünschte Zahl von Schichten erreicht ist. Dieses Verfahren ist wegen der vielen Arbeitsgänge fertigungstechnisch nicht optimal. Außerdem läßt nicht selten der Zusammenhalt der Schichten zu wünschen übrig.

Vorteilhafter ist ein anderes bekanntes Verfahren, bei dem man die feinteiligen Materialien, die die verschiedenen Schichten des fertigen Verbundsystems ergeben, in Schichten anordnet und gemeinsam sintert. Dieses Verfahren wird auch als Co-Sintern bezeichnet. Dabei ist die Bindung der verschiedenen Schichten in der Regel besser als bei dem oben beschriebenen Verfahren. Trotzdem sind die Verbundkörper in bezug auf mechanische und thermische Beanspruchbarkeit häufig nicht voll befriedigend, wobei unter thermischer Beanspruchung auch ein häufiger Wechsel zwischen kalten und heißen Betriebszuständen verstanden wird. Die dabei auftretenden Spannungen können zur Bildung von Rissen und zur Ablösung von Teilen des Verbundkörpers führen.

Aus dem US-Patent 4 806 739 sind durch Co-sintern hergestellte keramische Heizer bekannt, bei denen das Heizelement durch eine Aluminiumoxidschicht von einem Festelektrolyten, der aus Zirkon(IV)-oxid besteht, getrennt ist. In Spalte 2, Zeilen 22 bis 30, heißt es, daß eine geringe Menge Zirkon-(IV)-oxid im Aluminiumoxid die Schrumpfneigung (oder den Schwund) der Schicht zurückdrängt und eine festere Verbindung der beiden Schichten erreicht wird.

In der europäischen Patentschrift 203 351 wird ein durch Co-sintern hergestellter Sauerstoffsensor beschrieben, der zwischen einer Schicht aus einem Festelektrolyten, nämlich Zirkon(IV)-oxid, und einer elektrisch isolierenden Schicht mit Aluminiumoxid als Hauptbestandteil eine Zwischenschicht enthält, die mit dem Festelektrolyten und mit dem Aluminiumoxid der isolierenden Schicht reagiert und dessen linearer thermischer Ausdehnungskoeffizient zwischen denen der Materialien der beiden erwähnten Schichten liegt (Patentanspruch 1). Die Zwischenschicht besteht vorteilhaft aus Zirkon(IV)-oxid, das mit 6 Molprozent Yttriumoxid teilstabilisiert ist und 3 Gewichtsprozent Aluminiumoxid enthält (Spalte 8, Zeilen 9 bis 11). Sie vermindert die Spannung, die aus den unterschiedlichen thermischen Ausdehnungskoeffizienten der beiden Schichten resultiert und die, ohne die Zwischenschicht, den Sauerstoffsensor zerstören könnte (Spalte 7, Zeilen 58 bis 62). Weiterhin soll die Zwischenschicht die Verbindung zwischen den beiden Schichten verbessern, denn Zirkon(IV)-oxid und Aluminiumoxid reagieren kaum miteinander (Spalte 7, Zeilen 62 bis 64).

Die Patentschrift offenbart weiterhin, daß dem Aluminiumoxid der elektrisch isolierenden Schicht ein anorganischer Binder zugesetzt wird, der aus 30 Gewichtsprozent Aluminiumoxid, 53 Gewichtsprozent Siliziumdioxid und 17 Gewichtsprozent Magnesiumoxid besteht (Spalte 6, Zeilen 54 bis 60). Ein anderer geeigneter Binder enthält 5 bis 30 Gewichtsprozent Aluminiumoxid und 70 bis 95 Gewichtsprozent Siliziumdioxid (Spalte 7, Zeilen 37 bis 39). Der Binder soll unterhalb der Sintertemperatur des Aluminiumoxids schmelzen, das Sintern des Aluminiumoxids beschleunigen und dem Schwund beim Co-sintern mit Zirkon(IV)-oxid entgegenwirken (Spalte 7, Zeilen 20 bis 36). An derselben Stelle heißt es ohne nähere Erläuterung, daß man dem Schwund beim Sintern auch entgegenwirken kann, indem man die Teilchengrößenverteilung des Zirkon(IV)-oxids und des Aluminiumoxids anpaßt.

In dem US-Patent 4,957,673 wird ein Verbundsystem aus mindestens zwei keramischen Schichten beschrieben, zu dessen Herstellung im Nanometerbereich liegende Ausgangsmaterialien eingesetzt werden. Das Verbundsystem besteht dabei aus einer stabilisierten porösen Zirkoniumdioxidschicht (YSZ-Schicht) und einer angrenzenden, dichten Strontiumlanthanmagnesiumoxidschicht (LSM-Schicht). Aufgabe dieses Verbundsystems ist es, eine Diffusion von der LSM-Schicht in die YSZ-Schicht zu verhindern, damit keine Defekte in der Ionenleitung in der YSZ-Schicht auftreten. Um eine poröse LSM-Schicht auf der dichten YSZ-Schicht zu erreichen, wird das Ausgangsmaterial der YSZ-Schicht im Nanometerbereich mit dem Ausgangsmaterial der LSM-Schicht im Mikrometerbereich cogesintert.

### Vorteile der Erfindung

Die Verbundsysteme nach der Erfindung lassen sich fertigungstechnisch günstig durch Co-sintern herstellen. Die Schichten bestehen aus einer dichten, weitgehend von Makroporen freien Phase und sind daher mechanisch hoch beanspruchbar. Sie sind so fest miteinander verbunden, daß sie kaum ohne Zerstörung der Schichten voneinander getrennt werden können. Überraschenderweise sind die Verbundsysteme nach der Erfindung auch thermisch außerordentlich stabil. Sie überstehen zahlreiche Wechsel zwischen kalten und heißen Zuständen, ohne daß Spannungen zu einer Ablösung von Teilen des Verbundsystems oder gar zu dessen Zerstörung führen. Dieses Ergebnis wird ohne eine ausgleichende Zwischenschicht und ohne Zusätze von Bindern oder anderen Zusatzstoffen erreicht.

### Zeichnung

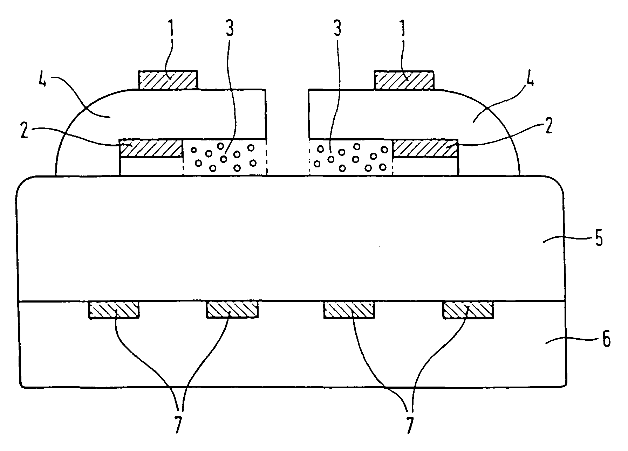

Die Zeichnung zeigt im Schnitt einen Sensor zur Bestimmung von Sauerstoff in mageren Abgasen, der erfindungsgemäß ein dichtes, im wesentlichen makroporenfreies, aus nanoskaligem Aluminiumoxid entstandes Substrat sowie eine durch Co-sintern fest damit verbundene, ebenfalls dichte und im wesentlichen makroporenfreie Schicht aufweist, die aus Zirkon(IV)oxid mit Teilchengrößen im Mikrometerbereich entstanden ist.

### Beschreibung der Erfindung

Die zuvor beschriebenen Vorteile weisen Verbundsysteme nach den Ansprüchen 4 und 5 auf, die nach den Verfahren der Ansprüche 1 bis 3 hergestellt wurden. Die Erfindung beruht auf der Beobachtung, daß Verbundsysteme mit mindestens zwei anorganischen, keramischen Schichten mechanisch und thermisch hoch beansprucht werden können und ausßerordentlich fest miteinander verbunden sind, wenn die benachbarten Phasen dicht, d.h. weitgehend frei von Makroporen sind. Bevorzugt werden Verbundsysteme mit oxidischen Schichten.

Die Verbundsysteme können zwei Schichten aufweisen, man kann aber auch Verbundsysteme mit 3 bis S und mehr Schichten nach dem Verfahren der Erfindung herstellen. Die keramischen Phasen können oxidisch sein oder aus anderen anorganischen Materialien, wie Nitriden, Carbiden und/oder Boriden, bestehen. Auch Mischphasen sind möglich, beispielsweise aus Nitriden und Carbiden.

Die feinteiligen anorganischen Materialien, die die Schichten des Verbundsystems ergeben, haben im allgemeinen dieselbe chemische Zusammensetzung wie die gesinterten Schichten. Es ist aber auch möglich, von Stoffen auszugehen, die sich beim Erhitzen verändern, beispielsweise von einem Gemisch aus Aluminiumoxid mit Aluminiumhydroxid und/oder Magnesiumcarbonat. Der Sintervorgang verläuft hinreichend langsam, so daß abgespaltenes Wasser und Kohlendioxid entweichen können.

Es ist ein wesentliches Merkmal der Erfindung, daß mindestens eines der unterschiedlichen feinteiligen Materialien, aus denen das Verbundsystem entsteht, aus Teilchen mit einem mittleren Teilchendurchmesser im Nanometer-Bereich besteht. Insbesondere sind Verbundsysteme mit benachbarten dichten oxidischen Phasen, von denen die eine aus nanoskaligem Pulver und die andere aus Pulver mit mittleren Teilchengrößen im Mikrometerbereich besteht, entstanden.

Eine vorteilhafte Weiterbildung der Erfindung besteht darin, daß die mittlere Teilchengröße des feinteiligen anorganischen Materials im Nanometer-Bereich, das eine bestimmte Schicht des Verbundsystems ergibt, mit der mittleren Teilchengröße eines feinteiligen anorganischen Materials, das eine benachbarte Schicht ergibt, so abgestimmt wird, daß die beiden entstehenden benachbarten keramischen Phasen dicht und praktisch hohlraumfrei sind. Dabei ist im allgemeinen die mittlere Teilchengröße des nanoskaligen feinteiligen anorganischen Materials die variable Größe, obwohl man auch umgekehrt die mittlere Teilchengröße des Materials mit Teilchen im Mikrometer-Bereich einer gegebenen mittleren Teilchengröße des Materials im Nanometer-Bereich anpassen kann.

Das Merkmal "weitgehend frei von Makroporen" impliziert, daß die dichten Phasen der Verbundsysteme nach der Erfindung sehr wohl Poren enthalten. Zum einen ist ein Sinterkörper niemals im strengen Sinne kompakt. Das Sintern kann man als eine Umwandlung von Ober- in Grenzflächen verstehen, wobei immer kleine Poren (Mikroporen) verbleiben. Deren Durchmesser ist jedoch kleiner als der mittlere Durchmesser der Teilchen. Daneben sind aber auch in aller Regel größere Poren (Makroporen) zu beobachten, deren Durchmesser größer als der mittlere Durchmesser der Teilchen sind. Diese unerwünschten, weil qualitätsmindernden Makroporen lassen sich auch bei strenger Kontrolle der Verfahrensbedingungen nur schwer vermeiden. Eine Schicht wird im Sinne dieser Erfindung als weitgehend frei von Makroporen angesehen, wenn der Volumenanteil der Poren mit einem Durchmesser von mehr als dem mittleren Durchmesser des feinteiligen anorganischen Materials, aus dem die Schicht entstanden ist, nicht mehr als 4 %, vorteilhaft nicht mehr als 2 % und insbesondere nicht mehr als 1 % beträgt. Der Volumenanteil wird durch quantitative Mikroskopie bestimmt.

Die mittleren Teilchendurchmesser der feinteiligen anorganischen Materialien im Nanometer-Bereich betragen im allgemeinen 10 bis 200 nm. Sie werden durch Raster- oder Tunnelelektronenmikroskopie bestimmt. Die anderen feinteiligen anorganischen Materialien liegen im allgemeinen in dem für die Sintertechnik gebräuchlichen Feinheitsgrad vor, d.h. der mittlere Teilchendurchmesser liegt im Mikrometer-Bereich, beispielsweise zwischen 2,5 und 5,0µm.

Die für die Erfindung verwendeten feinteiligen anorganischen Materialen sind dem Fachmann wohlbekannt. Die Herstellung feinteiliger oxidischer Materialien mit Teilchengrößen im Nanometer-Bereich wird z.B. von R. Naß et al in Eurogel '91, Elsevier Science Publishers B.V., Seiten 243 bis 255 beschrieben. Die Autoren führen weitere Literaturstellen auf, die die Herstellung nanoskaliger Materialien beschreiben.

Es ist keine für die Praxis brauchbare gesetzmäßige Beziehung bekannt, die es gestattet, aus dem mittleren Teilchendurchmesser des einen feinteiligen anorganischen Materials den optimalen mittleren Teilchendurchmesser des anderen feinteiligen anorganischen Materials, das eine benachbarte Schicht ergibt, zu berechnen. Man muß diesen optimalen mittleren Teilchendurchmesser vielmehr durch Vorversuche bestimmen. Dabei gilt die Regel, daß dasjenige feinteilige anorganische Material als nanoskaliges Material eingesetzt werden sollte, das bei einem mittleren Teilchendurchmesser im üblichen, also Mikrometer-Bereich eine höhere Sintertemperatur aufweist als ein anderes, für eine benachbarte Schicht vorgesehenes Material mit einer mittleren Teilchengröße, die ebenfalls im Mikrometerbereich liegt. Die mittlere Teilchengröße des nanoskaligen Materials sollte um so kleiner sein, je höher die Sintertemperatur des entsprechenden mikroskaligen Materials über der Sintertemperatur des ebenfalls mikroskaligen anderen feinteiligen anorganischen Materials liegt.

Die beim Co-sintern angewandte Sintertemperatur richtet sich nach der niedrigsten Sintertemperatur der bei der Herstellung des Verbundsystems beteiligten feinteiligen anorganischen Materialien mit mittleren Teilchendurchmessern im üblichen, d.h. im Mikrometer-Bereich. Man arbeitet also im allgemeinen bei 900 bis 1350 °C. Der Zeitbedarf für das Co-sintern liegt im üblichen Rahmen und beträgt im allgemeinen 1 bis 30 Stunden.

Das Verfahren eignet sich besonders für das Co-sintern von Schichten aus Zirkon(IV)-oxid, das voll- oder teilstabilisiert sein kann, mit Aluminiumoxid. Verbundsysteme mit besonders guten Egenschaften werden erhalten, wenn die mittlere Teilchengröße des feinteiligen Aluminiumoxids zwischen 50 und 200 Nanometer und die des Zirkon(IV)-oxids zwischen 0,5 und 2,0 Mikrometer liegt.

Die Verbundsysteme nach der Erfindung können ebene, flächige Gebilde oder gekrümmt sein, beispielsweise zylindrische oder konische Form aufweisen. Nach dem Verfahren der Erfindung lassen sich beispielsweise Gassensoren für die Bestimmung von Kohlenmonoxid in Abgasen von Verbrennungsmotoren herstellen. Andere Bauelemente, zu deren Herstellung das Verfahren nach der Erfindung sich eignet, sind Heizvorrichtungen und Temperaturfühler. Verbundsysteme nach der Erfindung bzw. solche Verbundsysteme enthaltende Bauelemente werden nach an sich bekannten Verfahren hergestellt. Beispielsweise können die vor dem Co-sintern angelegten Schichten aus feinteiligen anorganischen Materialen in Druck- oder Folientechnik erzeugt werden.

### Beispiel

Die vorliegende Erfindung wird bei einem Sensor für die Bestimmung von Sauerstoff in mageren Abgasen nach der Zeichnung verwirklicht. Der Sensor besteht aus einem Substrat 5 und einer Abdeckung 6, die den Heizer 7 einschließen und beide aus nanoskaligem Aluminiumoxid mit einer mittleren Teilchengröße von 90 nm hergestellt wurden. Der Festelektrolyt 4 besteht aus Zirkon(IV)-oxid und ist aus einem Pulver mit einer mittleren Teilchengröße von 1,8 µm entstanden. Der Festelektrolyt 4 und das Substrat 5 sind durch Co-sintern (5h bei 1300°C) fest miteinander verbunden. Zwischen dem dachförmig ausgebildeten Festelektrolyten 4 und dem Substrat 5 befinden sich die Kathode 2 und der Diffusionswiderstand 3, auf dem Festelektrolyten die Anode 1. Der Sensor zeigt eine hohe thermische und mechanische Beanspruchbarkeit auch bei häufigem Wechsel zwischen heißen Betriebs- und kalten Ruhezuständen. Die Ansprechempfindlichkeit entspricht derjenigen üblicher Sensoren dieser Art.

Dieselben Eigenschaften zeigen Sensoren, bei deren Herstellung nanoskaliges Aluminiumoxid mit mittleren Teilchengrößen von 14, 63 und 110 nm verwendet wurde.

## Patentansprüche

1. Verfahren zur Herstellung von Verbundsystemen mit mindestens zwei Schichten, die aus unterschiedlichen anorganischen, keramischen Phasen bestehen, durch gemeinsames Sintern (Co-Sintern) von in Schichten angeordneten, unterschiedlichen, feinteiligen anorganischen Materialien, dadurch gekennzeichnet, daß auf eine erste Schicht, die ein Pulver eines ersten keramischen Materials enthält, eine zweite Schicht, die ein Pulver eines zweiten keramischen Materials enthält, aufgebracht wird, wobei das erste und das zweite keramische Material aus Teilchen bestehen, deren durchschnittliche Teilchengröße für das erste Material im Nanometerbereich liegt und die durchschnittliche Teilchengröße des zweiten keramischen Materials im Mikrometerbereich liegt, wobei wenigstens die erste und zweite Schicht cogesintert werden, bei einer Sintertemperatur, die die niedrigst mögliche, für das keramische Material mit der Teilchengröße im Mikrometerbereich an sich bekannte Sintertemperatur ist, und wobei die erste Schicht Aluminiumoxid und die zweite Schicht Zirkoniumdioxid enthält.

2. Verfahren nach Anspruch 1, dadurch gekennzeichnet, daß das Zirkon(IV)-oxid teil- oder vollstabilisiert ist.

3. Verbundsystem mit mindestens zwei Schichten, die aus unterschiedlichen anorganischen, keramischen Phasen bestehen, hergestellt durch gemeinsames Sintern (Co-Sintern) von in Schichten angeordneten, unterschiedlichen, feinteiligen anorganischen Materialien, dadurch gekennzeichnet, daß mindestens zwei benachbarte Schichten aus einer dichten, weitgehend von Makroporen freien Phase bestehen, erhältlich durch das Verfahren nach Anspruch 1 oder 2.

## Claims

1. Process for producing composite systems having at least two layers comprising different inorganic, ceramic phases, by cosintering of different, finely divided inorganic materials arranged in layers, characterized in that on a first layer containing a powder of a first ceramic material there is applied a second layer which contains a powder of a second ceramic material, where the first and the second ceramic material comprise particles whose mean particle size for the first material is in the nanometer range and the mean particle size of the second ceramic material is in the micron range, where at least the first and second layers are cosintered at a sintering temperature which is the lowest possible sintering temperature known per se for the ceramic material having the particle size in the micron range and where the first layer contains aluminium oxide and the second layer contains zirconium dioxide.

2. Process according to Claim 1, characterized in that the zirconium(IV) oxide is partially or fully stabilized.

3. Composite system having at least two layers which comprise different inorganic, ceramic phases, produced by cosintering of different, finely divided inorganic materials arranged in layers, characterized in that at least two adjacent layers comprise a dense phase which is largely free of macropores and is obtainable by the process according to Claim 1 or 2.

## Revendications

1. Procédé servant à la fabrication de systèmes composites avec au moins deux couches, qui se composent de phases céramiques, inorganiques, différentes, en frittant ensemble (co-frittage) des matières inorganiques, finement divisées, différentes, disposées en couches, caractérisé en ce que
- sur une première couche, qui contient une poudre d'une première matière céramique,
- on met une deuxième couche, qui contient une poudre d'une deuxième matière céramique, la première et la deuxième matière céramique consistant en des particules, dont la taille moyenne de particules se trouve pour la première matière dans la zone du nanomètre et dont la taille moyenne de particules de la seconde matière céramique se trouve dans la zone du micromètre, au moins la première et la deuxième couche étant co-frittées à une température de frittage qui est la température de frittage, connue en soi, la plus basse possible pour la matière céramique qui a une taille de particules relevant de la zone du micromètre, et la première couche contenant de l'alumine et la deuxième couche du dioxyde de zirconium.

2. Procédé selon la revendication 1,
caractérisé en ce que
l'oxyde de zirconium (IV) est complètement ou partiellement stabilisé

3. Systèmes composites avec au moins deux couches, qui consistent en des phases céramiques, inorganiques, différentes, qui sont fabriqués par un frittage en commun (cofrittage) de matières inorganiques, finement divisées, différentes,
caractérisés en ce que
au moins deux couches voisines consistent en une phase étanche, largement exempte de macropores, que l'on obtient par le procédé selon la revendication 1 ou 2.
